# EUROPEAN PATENT APPLICATION

(11) **EP 4 708 624 A1**
(43) Date of publication of application: **11.03.2026**
(21) Application number: 25195680.1
(22) Date of filing: 13.08.2025
(51) Int. Cl.: H02J 7/40, H02J 7/70, H02J 9/06

(54) **POWER SYSTEMS**

(30) Priority: 29.08.2024 US 202418819220
(71) Applicant: Schneider Electric IT Corporation, Foxboro, MA 02035 (US)
(72) Inventor: CHIEN, Shen-Yuan, 100 TAIPEI CITY (TW); CHEN, Chung-Hui, 23143 NEW TAIPEI CITY (TW); WU, Wen-Sung, 23143 NEW TAIPEI CITY (TW)
(74) Representative: Plasseraud IP

(57) **Abstract**

A power system includes a lever bar configured to move between a first position and a second position. In the first position, the lever bar is configured to enable the power system to mate with a first type of replacement battery cartridge, mate with a first type of external battery connector, block a second type of replacement battery cartridge, and block a second type of external battery connector. In the second position, the lever bar is configured to enable the power system to mate with the second type of replacement battery cartridge, mate with the second type of external battery connector, block the first type of replacement battery cartridge, and block the first type of external battery connector.

## Description

### BACKGROUND OF DISCLOSURE

### 1. Field of Disclosure

This disclosure is directed to uninterruptible power supplies (UPSs), and more particularly to a mechanism configured to ensure the proper installation of a battery type in the UPS.

### 2. Discussion of Related Art

Lithium-ion batteries are becoming increasingly used in power systems, including UPSs, because of the many advantages lithium-ion batteries have over conventional lead-acid batteries. Lithium-ion batteries offer smaller size, higher power density, long life cycle, and quicker recharging; however, from initial investment standpoint, the high initial set-up cost is still a concern and inhibits many customers from adopting lithium-ion batteries as a power solution. There is a need for power systems, including UPSs, that are compatible with both lithium-ion and lead-acid battery packs.

### SUMMARY OF DISCLOSURE

One aspect of the present disclosure is directed to a power system comprising a lever bar configured to move between a first position and a second position. In the first position, the lever bar is configured to enable the power system to mate with a first type of replacement battery cartridge, mate with a first type of external battery connector, block a second type of replacement battery cartridge, and block a second type of external battery connector. In the second position, the lever bar is configured to enable the power system to mate with the second type of replacement battery cartridge, mate with the second type of external battery connector, block the first type of replacement battery cartridge, and block the first type of external battery connector.

Embodiments of the power system further may include a first type of battery connector configured to connect to the first type of replacement battery cartridge and a second type of battery connector configured to connect to the second type of replacement battery cartridge. The power system further may include a first stopper element associated with the first type of replacement battery cartridge and a second stopper element associated with the second type of replacement battery cartridge. The first stopper element may be configured to engage the second type of battery connector to prevent connection between the first type of replacement battery cartridge and the second type of battery connector, and the second stopper element may be configured to engage the first type of battery connector to prevent connection between the second type of replacement battery cartridge and the first type of battery connector. The first type of battery connector may include a first member positioned to engage the second stopper element to prevent connection between the first type of replacement battery cartridge and the second type of battery connector, and the second type of battery connector may include at least one second member positioned to engage the first stopper element to prevent connection between the second type of replacement battery cartridge and the first type of battery connector. The power system further may include an enclosure configured to support the lever bar. The lever bar may be coupled to the enclosure to enable the lever bar to achieve the first position and the second position. The enclosure may include a receiving slot configured to receive one of the first type of replacement battery cartridge or the second type of replacement battery cartridge therein. The power system further may include a first type of battery connector coupled to the enclosure. The first type of battery connector may be configured to mate with the first type of replacement battery cartridge when fully inserting the first type of replacement battery cartridge in the receiving slot. The power system further may include a second type of battery connector coupled to the enclosure. The second type of battery connector may be configured to mate with the second type of replacement battery cartridge when fully inserting the second type of replacement battery cartridge into the receiving slot. The lever bar may include a tab portion configured to be grasped to move the lever bar between the first position and the second position. **In** the first position, the lever bar may be configured to manipulate a mating external battery connector to mate with the first type of external battery connector and to block the second type of external battery connector. **In** the second position, the lever bar may be configured to manipulate the mating external battery connector to mate with the second type of external battery connector and to block the first type of external battery connector. The power system further may include a spring configured to bias the lever bar in the first position or in the second position. The first type of replacement battery cartridge may include a lead-acid type battery, an external battery connected to the first type of external battery connector may include a lead-acid type battery, the second type of replacement battery cartridge may include a lithium-ion type battery, and an external battery connected to the second type of external battery connector may include a lithium-ion type battery.

Another aspect of the present disclosure is directed to a method of connecting a type of replacement battery cartridge and a type of external battery within a power system. In one embodiment, the method comprises: selecting one of a first position or a second position of a lever bar of the power system. In the first position, the power system is configured to mate with a first type of replacement battery cartridge, mate with a first type of external battery connector, block a second type of replacement battery cartridge, and block a second type of external battery connector. In the second position, the power system being configured to mate with the second type of replacement battery cartridge, mate with the second type of external battery connector, block the first type of replacement battery cartridge, and block the first type of external battery connector.

Embodiments of the method further may include connecting a first type of battery connector to the first type of replacement battery cartridge and connecting a second type of battery connector to the second type of replacement battery cartridge. The method further may include engaging a first stopper element associated with the first type of replacement battery cartridge with the second type of battery connector to prevent connection between the first type of replacement battery cartridge and the second type of battery connector and engaging a second stopper element associated with the second type of replacement battery cartridge with the first type of battery connector to prevent connection between the second type of replacement battery cartridge and the first type of battery connector. The method further may include positioning a first member of the first type of battery connector to engage the second stopper element to prevent connection between the first type of replacement battery cartridge and the second type of battery connector and positioning a second member of the second type of battery connector to engage the first stopper element to prevent connection between the second type of replacement battery cartridge and the first type of battery connector. The lever bar may be supported by an enclosure. The lever bar may be coupled to the enclosure to enable the lever bar to achieve the first position and the second position. The enclosure may include a receiving slot configured to receive one of the first type of replacement battery cartridge or the second type of replacement battery cartridge therein. The method further may include coupling a first type of battery connector to the enclosure. The first type of battery connector may be configured to mate with the first type of replacement battery cartridge when fully inserting the first type of replacement battery cartridge in the receiving slot. The method further may include coupling a second type of battery connector to the enclosure. The second type of battery connector may be configured to mate with the second type of replacement battery cartridge when fully inserting the second type of replacement battery cartridge into the receiving slot. The lever bar may include a tab portion configured to be grasped to move the lever bar between the first position and the second position. In the first position, the lever bar may be configured to manipulate a mating external battery connector to mate with the first type of external battery connector and to block the second type of external battery connector. In the second position, the lever bar may be configured to manipulate the mating external battery connector to mate with the second type of external battery connector and to block the first type of external battery connector. The method further may include biasing the lever bar in the first position or in the second position with a spring. The first type of replacement battery cartridge may include a lead-acid type battery, an external battery connected to the first type of external battery connector may include a lead-acid type battery, the second type of replacement battery cartridge may include a lithium-ion type battery, and an external battery connected to the second type of external battery connector may include a lithium-ion type battery.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1 is a perspective view of an example power system and two types of replacement battery cartridges, namely a lead-acid replacement battery cartridge and a lithium-ion replacement battery cartridge;
FIG. 2 is a front perspective view the example power system and an external battery;
FIG. 3 is a top plan view of the example power system with a top removed to reveal components of the example power system supported by an enclosure;
FIG. 4A is a perspective view of the example lead-acid replacement battery cartridge;
FIG. 4B is a perspective view of the example lithium-ion replacement battery cartridge;
FIG. 5A is a plan view of an example external battery connector for a lead-acid external battery;
FIG. 5B is a plan view of an example external battery connector for a lithium-ion external battery;
FIG. 6A is an elevational view of a portion of the example power system showing a mating battery connector for the external battery connector for the lead-acid external battery;
FIG. 6B is an elevational view of a portion of the example power system showing a mating battery connector for the external battery connector for the lithium-ion external battery;
FIG. 7 is a perspective view of a portion of the example power system showing the external battery connector for the lead-acid external battery prior to being connected to its respective mating battery connector;
FIG. 8 is a perspective view of a portion of the example power system showing the external battery connector for the lithium-ion external battery prior to being connected to its respective mating battery connector;
FIG. 9 is a perspective view of a portion of the example power system showing the lead-acid replacement battery cartridge inserted into an enclosure of the power system, with a lever bar being shown in a first position;
FIG. 10 is a perspective view of a portion of the example power system showing the lithium-ion replacement battery cartridge inserted into an enclosure of the power system, with a lever bar being shown in a second position;
FIG. 11A is an exploded perspective view showing the example lever bar including a stopper, a level bar arm, and an external knob or position indicator for operator access;
FIG. 11B is a perspective view showing the example lever bar within the power system;
FIG. 12A is an elevational view showing an example torsion spring biasing the example lever bar to the first position; and
FIG. 12B is an elevational view showing the example torsion spring biasing the lever bar to the second position.

### DETAILED DESCRIPTION

In one embodiment, a power system, such as a UPS, can be configured to receive a lithium-ion replacement battery cartridge and to connect to an external lithium-ion battery or configured to receive a lead-acid battery cartridge and to connect to an external lead-acid battery. Aspects of the present disclosure enable the UPS to be configured to connect with any type of battery, not just lithium-ion and lead-acid batteries. Further, although a UPS is shown and described herein, aspects of the present disclosure can apply to any type of power system, including but not limited to power strips and power distribution units.

This disclosure is not limited in its application to the details of construction and the arrangement of components set forth in the following description or illustrated in the drawings. The principles set forth in this disclosure are capable of being provided in other embodiments and of being practiced or of being carried out in various ways. Also, the phraseology and terminology used herein is for the purpose of description and should not be regarded as limiting. The use of "including," "comprising," "having," "containing," "involving," and variations thereof herein, is meant to encompass the items listed thereafter and equivalents thereof as well as additional items. When specific dimensions, quantities or magnitudes are provided they should be considered in reference to the specific embodiment referenced as they may be scaled to suit other embodiments.

As will be explained in details below, the nomenclature used when describing some embodiments of this disclosure distinguishes between connectors for internal (replacement) and external batteries as follows: The term "battery connector" refers to connectors located for example within a UPS enclosure that are configured to mate with internal replacement battery cartridges. The term "external battery connector" refers in some examples to connectors associated with external batteries, which are configured to mate with a corresponding connector on the UPS enclosure. This corresponding connector on the UPS enclosure may be referred to as the "mating external battery connector". Thus, in some examples, the "external battery connector" (on the external battery) interfaces with the "mating external battery connector" (on the UPS enclosure), while the "battery connector" interfaces with the internal replacement battery cartridge. This nomenclature ensures a clear distinction between the connectors used for internal (replacement) batteries, external batteries, and the interface point on the UPS for external battery connection.

**In** one embodiment, a UPS is configured to be connected to an external battery by an external battery connector. The UPS further is configured to receive a replacement battery cartridge to provide back-up power to the UPS. **In** instances in which the UPS is connected to a lithium-ion external battery necessitates that a replacement battery cartridge be a lithium-ion replacement battery cartridge. Similarly, in instances in which the UPS is connected to a lead-acid external battery necessitates that a replacement battery cartridge be a lead-acid replacement battery cartridge.

Embodiments of the present disclosure are directed to a mechanism configured to ensure that a battery cartridge of a UPS is compatible with an external battery that provides external power to the UPS.

In some embodiments, a power system includes a lever bar configured to select the type of replacement battery cartridge or external battery connector being installed. A position of the lever bar determines the type of replacement battery cartridge and external battery connector that can be connected to the power system.

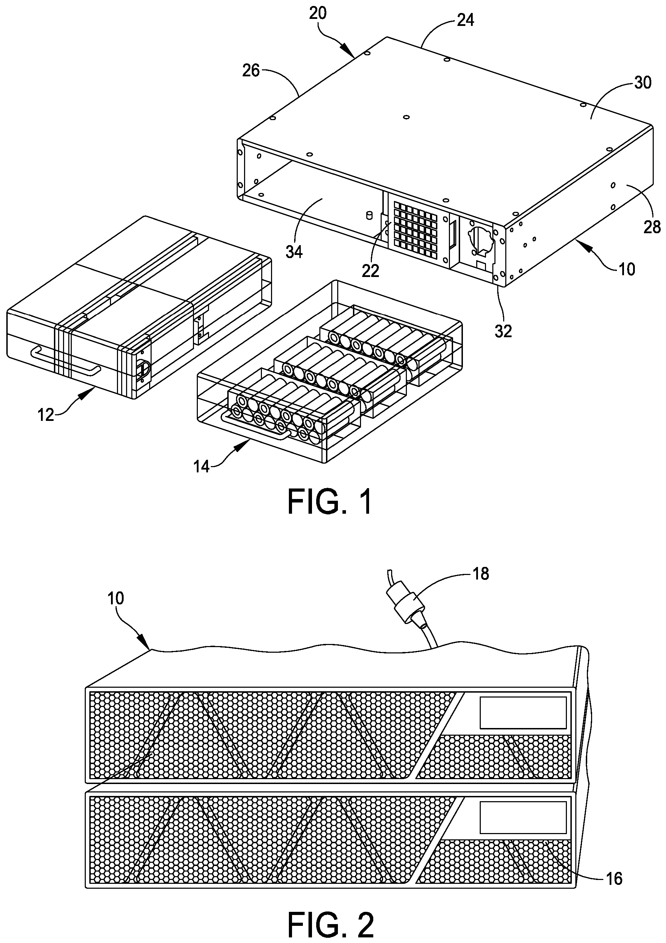

Referring to the drawings and more particularly to FIG. 1, an uninterruptible power supply (UPS) is generally indicated at 10. A UPS provides back-up power to a load when the main power source to the UPS fails. The UPS 10 provides instantaneous or nearly instantaneous power to the load. The UPS 10 receives power from an external source, such as mains power. In other embodiments, as will be described in greater detail below, the UPS 10 receives power from an external battery via an external battery connector configured to mate with a mating external battery connector associated with the UPS 10. In the event of failure of power from mains power, the UPS 10 further can be configured with one or more internal batteries, sometimes referred to herein as battery packs or replacement battery cartridges, housed within the UPS 10. FIG. 1 shows two replacement battery cartridges, a lead-acid replacement battery cartridge, generally indicated at 12, which is sometimes referred to as a first type of replacement battery cartridge, and a lithium-ion replacement battery cartridge, generally indicated at 14, which is sometimes referred to as a second type of replacement battery cartridge. Each replacement battery cartridge 12, 14 is configured to be received within the UPS 10. The internal batteries are easily connected to and disconnected from the UPS 10. The UPS 10 further may include integrated surge protection to protect the load from voltage spikes.

Referring to FIG. 2, the UPS 10 further includes an external battery 16 and an external battery connector 18. As noted above, the external battery 16 is connected to the UPS 10 by external battery connector 18 to provide power to the UPS in the event of failure of power from mains power. As will be described in greater detail below, in one embodiment, the external battery 16 can be a lead-acid external battery and the external battery connector 18 can be specially configured to connect the lead-acid external battery to a mating external battery connector of the UPS 10. In another embodiment, the external battery 16 can be a lithium-ion external battery and the external battery connector 18 can be specially configured to connect the lithium-ion external battery to the mating external battery connector of the UPS 10.

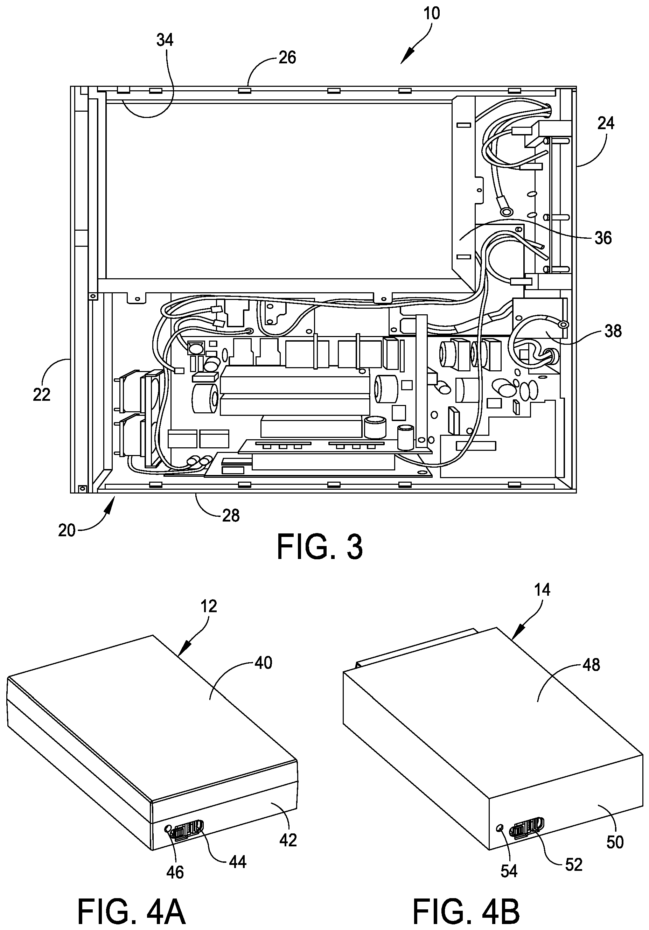

Referring additionally to FIG. 3, the UPS 10 includes an enclosure, generally indicated at 20, having a front 22, a back 24, two sides 26, 28, a top 30, and a bottom 32. As shown, the enclosure 20 is a rectangular-cuboid structure that is shaped and sized to fit within a mounting slot, such as a mounting slot of an equipment rack. The interior of the enclosure 20 of the UPS 10 is configured to support the internal components of the UPS 10. As shown, the enclosure includes a receiving slot 34 accessible through the front 22 of the enclosure 20. The receiving slot 34 is configured to receive a battery cartridge, e.g., lead acid replacement battery cartridge 12 or lithium-ion replacement battery cartridge 14, therein. As noted above, FIG. 1 shows two types of replacement battery cartridges, the lead-acid replacement battery cartridge 12 and the lithium-ion replacement cartridge 14. As shown, the replacement battery cartridges 12, 14 are each shaped and sized to fit within the receiving slot 34 of the enclosure 20 of the UPS 10. The lead-acid replacement battery cartridge 12 is a rechargeable battery that includes lead-acid battery cells configured to generate power. Similarly, the lithium-ion replacement battery cartridge 14 is a rechargeable battery that includes lithium-ion battery cells configured to generate power.

The UPS 10 further includes a replacement battery cartridge connector 36, which is configured to mate with one of the lead-acid replacement battery cartridge 12 or the lithium-ion replacement battery cartridge 14. The replacement battery cartridge connector 36 can be particularly configured to mate with its appropriate replacement battery cartridge 12 or 14. The replacement battery cartridge connector 36 is configured to detect the type of replacement battery cartridge inserted into the receiving slot 34 of the enclosure 20. In one embodiment, the UPS 10 is configured to distinguish the type of replacement battery cartridge by a signal communicated through the replacement battery cartridge connector 36. The UPS 10 further includes a mating external battery connector 38, which is configured to mate with an external battery connector of an external battery, e.g., external battery connector 18 of external battery 16. As will be described in greater detail below, the mating external battery connector 38 can be particularly configured to mate with its appropriate external battery connector. Similar to the replacement battery cartridge connector 36, the mating external battery connector 38 is configured to distinguish the type of external battery. The manner in which the mating external battery connector 38 is connected to the external battery will be described in greater detail below.

As noted, it may be desirable to ensure that when the UPS 10 is connected to a lead-acid external battery, that only the lead-acid replacement battery cartridge 12 is inserted into the receiving slot 34 of the enclosure 20 to mate with the replacement battery cartridge connector 36, or when the UPS 10 is connected to a lithium-ion external battery, that only the lithium-ion replacement battery cartridge 14 is inserted into the receiving slot 34 to mate with the replacement battery cartridge connector 36. In one embodiment, the replacement battery cartridge 12, 14 and the external battery are connected in parallel within the UPS 10. If different battery types are connected through the replacement battery cartridge 12, 14 and the external battery, the differing characteristics of the power sources may lead to improper charging and excessive power current that may cause damage to the UPS 10.

In one embodiment, the lead-acid replacement battery cartridge 12 and the lithium-ion replacement battery cartridge 14 are designed with similar packaging while including differing mechanical features to differentiate the battery types. Similarly, as will be described in greater detail below, the external battery connector 18, including a lead-acid external battery connector and a lithium-ion external battery connector, is designed with different mechanical features to differentiate the battery types from one another.

Referring to FIGS. 4A and 4B, FIG. 4A illustrates the lead-acid replacement battery cartridge 12. As shown, the lead-acid replacement battery cartridge 12 includes a rectangular-cuboid body 40 having an end 42 including a mating connector 44 and a mating feature 46. The mating connector 44 is configured to electrically (and mechanically) connect to the replacement battery cartridge connector 36. In one embodiment, the replacement battery cartridge connector 36 embodies a lead-acid type battery connector coupled to the enclosure 20, with the mating connector 44 of the lead-acid replacement battery cartridge 12 being configured to mate with the lead-acid type replacement battery cartridge connector when fully inserting the lead-acid replacement battery cartridge in the receiving slot. The mating feature 46 embodies a small opening that is positioned on the end 42 of the body 40 of the lead-acid replacement battery cartridge 12 to receive a feature, e.g., a pin, that is independent of the replacement battery cartridge connector 36. Specifically, the feature moves with the lever bar 80 when the operator manually sets up the UPS 10. The location of the mating feature 46 is different than the location of a mating feature of the lithium-ion replacement battery cartridge 14 to prevent inadvertent insertion of the lithium-ion replacement battery cartridge into the receiving slot 34 of the UPS 10. The arrangement is such that when inserting the lead-acid replacement battery cartridge 12 into the receiving slot 34 of the enclosure 20 of the UPS 10, the mating feature 46 of the body 40 of the lead-acid replacement battery cartridge 12 receives the feature of the replacement battery cartridge connector 36 to enable the lead-acid replacement battery cartridge 12 to be fully received within the receiving slot 34 so that the mating connector 44 fully engages the replacement battery cartridge connector 36.

Similarly, the lithium-ion replacement battery cartridge 14 includes a rectangular-cuboid body 48 having an end 50 including a mating connector 52 and a mating feature 54. The mating connector 52 is configured to electrically (and mechanically) connect to the replacement battery cartridge connector 36. The mating feature 54 embodies a small opening that is positioned on the end 50 of the body 48 to receive a feature, e.g., a pin, that is independent of the replacement battery cartridge connector 36. Specifically, the feature moves with the lever bar 80 when the operator manually sets up the UPS 10. In one embodiment, the replacement battery cartridge connector 36 embodies a lithium-ion type battery connector coupled to the enclosure 20, with the mating connector 52 of the lithium-ion replacement battery cartridge 14 being configured to mate with the lithium-ion type replacement battery cartridge connector when fully inserting the lithium-ion replacement battery cartridge in the receiving slot. The location of the mating feature 54 of the lithium-ion replacement battery cartridge 14 is different than the location of the mating feature 46 of the lead-acid replacement battery cartridge 12 to prevent inadvertent insertion of the lead-acid replacement battery cartridge 12 into the receiving slot 34 of the enclosure 20 of the UPS 10. The arrangement is such that when inserting the lithium-ion replacement battery cartridge 14 into the receiving slot 34 of the enclosure 20 of the UPS 10, the mating feature 54 of the body 48 of the lithium-ion replacement battery cartridge 14 receives the feature of the replacement battery cartridge connector 36 to enable the lithium-ion replacement battery cartridge 14 to be fully received within the receiving slot 34 so that the mating connector 52 fully engages the replacement battery cartridge connector 36.

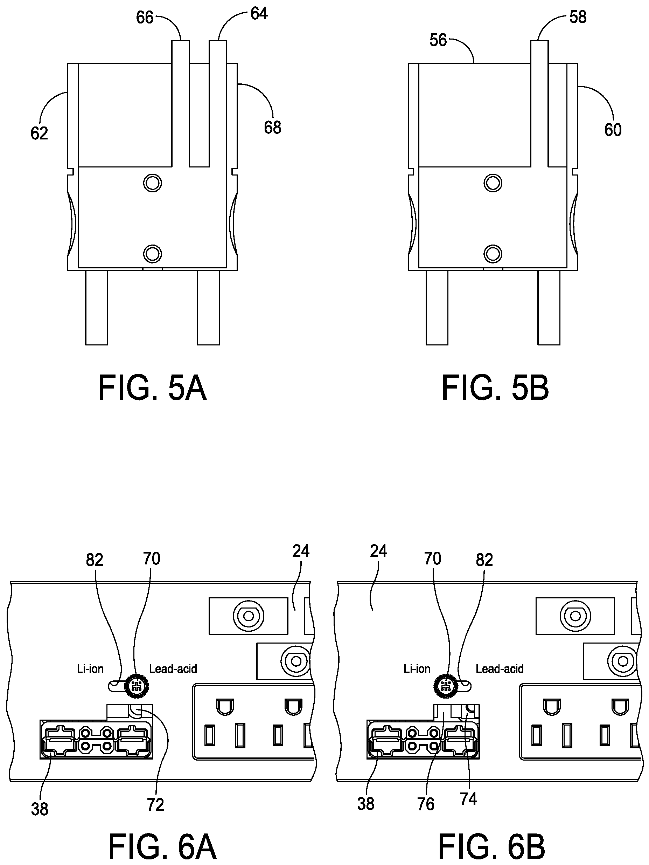

Referring to FIGS. 5A and 5B, FIG. 5A shows a lead-acid external battery connector 56 that is configured to connect a lead-acid external battery to the mating external battery connector 38 provided in the enclosure 20 of the UPS 10, which will be described in greater detail below. As shown, the lead-acid external battery connector 56 includes first feature, e.g., a single prong 58, that is spaced a predetermined distance from an edge 60 of the connector 56. The first feature, e.g., prong 58, is configured to be received within a first mating feature of the mating external battery connector 38 of the enclosure 20 of the UPS 10.

FIG. 5B shows a lithium-ion external battery connector 62 that is configured to connect a lithium-ion external battery to the mating external battery connector 38 provided in the enclosure 20 of the UPS 10, which will also be described in greater detail below. As shown, the lithium-ion external battery connector 62 includes a second feature, e.g., two spaced-apart prongs 64, 66, with prong 64 being spaced a predetermined distance from an edge 68 of the connector 62. The spacing of first feature, e.g., prong 58, from the edge 60 of the lead-acid external battery connector 56 is different than the spacing of the second feature, e.g., prong 64, from the edge 68 of the lithium-ion external battery connector 62 to prevent the external battery connector from being connected to an incorrect mating external battery connector. The second feature, e.g., prongs 64, 66, is configured to be received within a second mating feature of the mating external battery connector 38 of the enclosure 20 of the UPS 10.

The lead-acid external battery connector 56 and the lithium-ion external battery connector 62 are substantially identical with one another except for the provision of prong 58 associated with the lead-acid external battery connector 56 and the provision of prongs 64, 66 associated with the lithium-ion external battery connector 62.

Referring to FIGS. 6A and 6B, the mating external battery connector 38 is provided on the back 24 of the enclosure 20. The mating external battery connector 38 can be configured to achieve a first configuration in which the mating external battery connector 38 is configured to receive the lead-acid external battery connector 56 (FIG. 6A) and a second configuration in which the mating external battery connector 38 is configured to receive the lithium-ion external battery connector 62 (FIG. 6B). A tab indicator 70 is provided to indicate to an operator whether the mating external battery connector 38 is in the first configuration, e.g., positioned toward a lead-acid label, or in the second configuration, e.g., positioned toward a lithium-ion label. As will be described in greater detail below, the tab indicator 70 is part of a lever bar that is designed to be movable by the operator to set up the UPS 10 for lead-acid or lithium-ion replacement battery cartridges 12, 14 and external batteries.

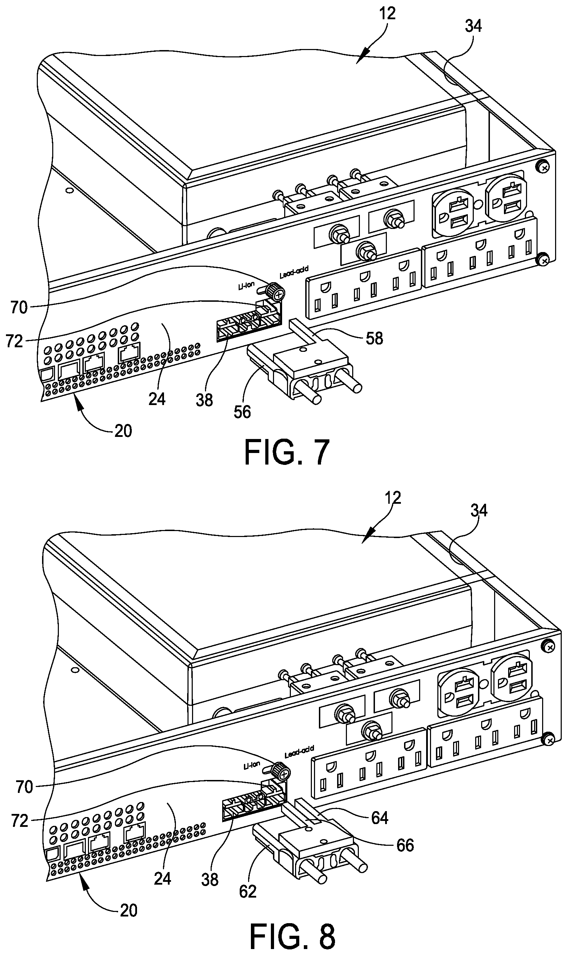

The first configuration of the mating external battery connector 38 shown in FIG. 6A includes a single opening 72, sometimes referred to as a first mating feature, that is positioned to receive the first feature, e.g., the single prong 58, of the lead-acid external battery connector 56. The second configuration of the mating external battery connector 38 shown in FIG. 6B includes two spaced-apart openings 74, 76, sometimes referred to as a second mating feature, that are positioned to receive the second feature, e.g., the two spaced-apart prongs 64, 66, of the lithium-ion external battery connector 62. Thus, when the mating external battery connector 38 is in the first configuration, the mating external battery connector 38 can only connect to the lead-acid external battery connector 56 and is inhibited from being connected to the lithium-ion external battery connector 62. FIG. 7 shows the lead-acid external battery connector 56 being received within the mating external battery connector 38 in the first configuration. And, when the mating external battery connector 38 is in the second configuration, the mating external battery connector 38 can only connect to the lithium-ion external battery connector 62 and is inhibited from being connected to the lead-acid external battery connector 56. FIG. 8 shows the UPS 10 setup for the lead-acid replacement battery cartridge 12, with the lithium-ion external battery connector 62 prevented from being received within the mating external battery connector 38 in the first configuration.

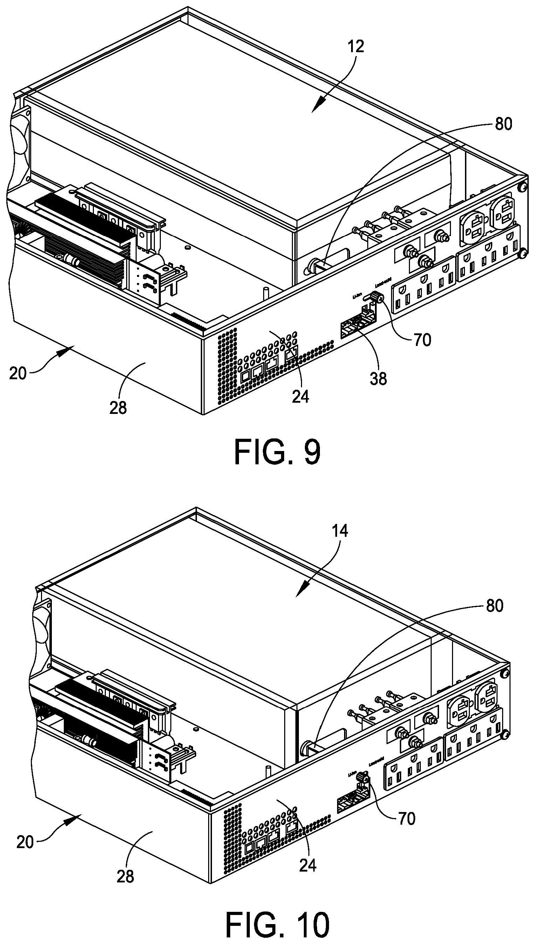

Referring to FIG. 9, the UPS 10 further includes a lever bar 80, which is configured to move between a first position and a second position. In one embodiment, the lever bar 80 includes the tab indicator 70, which is sometimes referred to as a tab portion, to enable the operator to grasp the lever bar 80 to move the lever bar 80 between the first position and the second position. FIG. 9 shows the lever bar 80 in the first position. As best shown in FIGS. 6A and 6B, there is a slot 82 formed in the back 24 of the enclosure 20 that enables the operator to toggle the tab indicator 70 of the lever bar 80 between the first position and the second position. In one embodiment, the end of the lever bar 80 is threaded and extends through the slot 82 formed in the back 24 of the enclosure, and the tab indicator 70 is threadably secured to the end of the lever bar 80. The lever bar 80 is allowed to move within the slot 82 between the first position and the second position.

In the first position, the lever bar 80 is configured to enable the UPS 10 to 1) mate with a first type of replacement battery cartridge, e.g., the lead-acid replacement battery cartridge 12, 2) mate with a first type of external battery connector, e.g., external battery connector 18 configured to connect the lead-acid external battery, 3) block a second type of replacement battery cartridge, e.g., the lithium-ion replacement battery cartridge 14, and 4) block a second type of external battery connector, e.g., external battery connector configured to connect the lithium-ion external battery. In the second position, the lever bar 80 is configured to enable the UPS 10 to 1) mate with the second type of replacement battery cartridge, e.g., the lithium-ion replacement battery cartridge 14, 2) mate with the second type of external battery connector, e.g., external battery connector 18 configured to connect the lithium-ion external battery, 3) block the first type of replacement battery cartridge, e.g., the lead-acid replacement battery cartridge 12, and 4) block the first type of external battery connector, e.g., external battery connector 18 configured to connect to the lead-acid external battery.

As shown in FIG. 9, the lead-acid replacement battery cartridge 12 is inserted into the receiving slot 34 of the enclosure 20 of the UPS 10. The lever bar 80 is switched to the first position to enable the lead-acid replacement battery cartridge 12 to be fully inserted into the receiving slot 34 so that the mating connector 44 of the lead-acid replacement battery cartridge 12 is fully connected to the replacement battery cartridge connector 36. As shown in FIG. 10, when in the first position, the lever bar 80 prevents the insertion of another type of replacement battery cartridge, e.g., the lithium-ion replacement battery cartridge 14, from being inserted into the receiving slot 34 of the enclosure 20 of the UPS 10.

To facilitate the prevention of an improper replacement battery cartridge from being inserted into the receiving slot 34 of the enclosure 20 of the UPS 10, each replacement battery cartridge 12, 14 includes a stopper element 84 configured to engage a member of the replacement battery cartridge connector 36. Specifically, the lead-acid replacement battery cartridge 12 includes a first stopper element positioned proximate to its mating connector 44 and the lithium-ion replacement battery cartridge 14 includes a second stopper element also positioned proximate to its mating connector 52. The first stopper element of the lead-acid replacement battery cartridge 12 is configured to engage a second member, e.g., prong 64, of the lithium-ion battery connector 62 to prevent connection between the lead-acid replacement battery cartridge 12 and the lithium-ion battery connector. Similarly, the second stopper element of the lithium-ion replacement battery cartridge 14 is configured to engage a first member, e.g., prong 58, of the lead-acid battery connector 56 to prevent connection between the lithium-ion replacement battery cartridge 14 and the lead-acid battery connector 56.

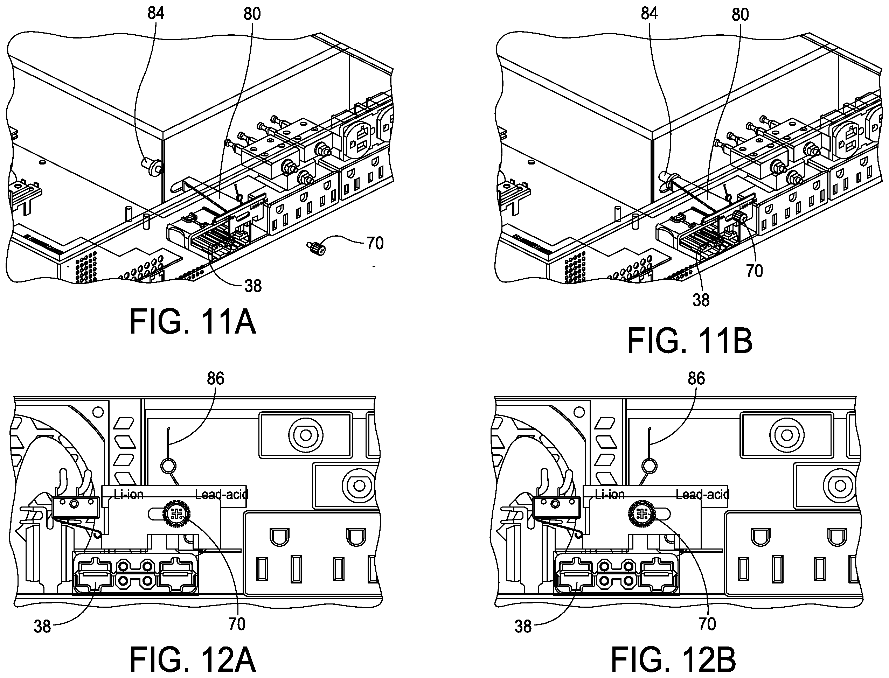

Referring to FIGS. 12A and 12B, the UPS 10 further includes a spring, e.g., a torsion spring 86, to bias the lever bar 80 and its associated tab indicator 70 once the lever bar 80 is moved to the first position or the second position. In one embodiment, the torsion spring 86 includes a first end that extends through a small opening in the back 24 and a second end that engages the lever bar 80. When the operator moves the lever bar 80 to the first position, the torsion spring 86 maintains the lever bar 80 in the first position. Thus, to move the lever bar 80 to the second position, the operator needs to overcome the bias of the torsion spring 86 to laterally move the lever bar 80. Once in the second position, the torsion spring 86 maintains the lever bar 80 in the second position.

Another aspect of the present disclosure is directed to a method of connecting a type of replacement battery cartridge, e.g., the lead-acid replacement battery cartridge 12 or the lithium-ion replacement battery cartridge 14, and a type of external battery, e.g., the lead-acid external battery having the lead-acid external battery connector or the lithium-ion external battery having the lithium-ion external battery connector, within a power system, such as UPS 10. As discussed above, the method includes controlling the lever bar 80 to select one of a first position or a second position. When in the first position, the power system is configured to 1) mate with a first type of replacement battery cartridge, e.g., the lead-acid replacement battery cartridge 12, 2) mate with a first type of external battery connector, e.g., external battery connector 18 configured to connect to the lead-acid external battery, 3) block a second type of replacement battery cartridge, e.g., the lithium-ion replacement battery cartridge 14, and 4) block a second type of external battery connector, e.g., external battery connector 18 configured to connect to the lithium-ion battery. And, when in the second position, the power system is configured to 5) mate with the second type of replacement battery cartridge 14, 6) mate with the second type of external battery connector, 7) block the first type of replacement battery cartridge 12, and 8) block the first type of external battery connector.

In some embodiments, the method further includes connecting a first type of battery connector to the first type of replacement battery cartridge and connecting a second type of battery connector to the second type of replacement battery cartridge.

**In** some embodiments, the method further includes engaging a first stopper element associated with the first type of replacement battery cartridge with the second type of battery connector to prevent connection between the first type of replacement battery cartridge and the second type of battery connector and engaging a second stopper element associated with the second type of replacement battery cartridge with the first type of battery connector to prevent connection between the second type of replacement battery cartridge and the first type of battery connector.

**In** some embodiments, the method further includes positioning a first member of the first type of battery connector to engage the second stopper element to prevent connection between the first type of replacement battery cartridge and the second type of battery connector and positioning a second member of the second type of battery connector to engage the first stopper element to prevent connection between the second type of replacement battery cartridge and the first type of battery connector.

In some embodiments, the method further includes coupling a first type of battery connector to the enclosure, the first type of battery connector being configured to mate with the first type of replacement battery cartridge when fully inserting the first type of replacement battery cartridge in the receiving slot and coupling a second type of battery connector to the enclosure, the second type of battery connector being configured to mate with the second type of replacement battery cartridge when fully inserting the second type of replacement battery cartridge into the receiving slot.

Various controllers may execute various operations discussed herein. Using data stored in associated memory and/or storage, the controllers may also execute one or more instructions stored on one or more non-transitory computer-readable media that may result in manipulated data. In some examples, the controllers may include one or more processors or other types of controllers. In one example, the controllers are or include a commercially available, general-purpose processor. In another example, the controllers perform at least a portion of the operations discussed above using an application-specific integrated circuit tailored to perform particular operations in addition to, or in lieu of, a general-purpose processor. As illustrated by these examples, examples in accordance with the present invention may perform the operations described herein using many specific combinations of hardware and software and the invention is not limited to any particular combination of hardware and software components.
Numbered examples are listed below:
Example 1. A power system, comprising:
   a lever bar configured to move between a first position and a second position,
   in the first position, the lever bar is configured to enable the power system to
      mate with a first type of replacement battery cartridge,
      mate with a first type of external battery connector,
      block a second type of replacement battery cartridge, and
      block a second type of external battery connector,
   in the second position, the lever bar is configured to enable the power system to
      mate with the second type of replacement battery cartridge,
      mate with the second type of external battery connector,
      block the first type of replacement battery cartridge, and
      block the first type of external battery connector.
Example 2. The power system of example 1, further comprising
   a first type of battery connector configured to connect to the first type of replacement battery cartridge, and
   a second type of battery connector configured to connect to the second type of replacement battery cartridge.
Example 3. The power system of example 2, further comprising
   a first stopper element associated with the first type of replacement battery cartridge, and
   a second stopper element associated with the second type of replacement battery cartridge,
   wherein the first stopper element is configured to engage the second type of battery connector to prevent connection between the first type of replacement battery cartridge and the second type of battery connector, and the second stopper element is configured to engage the first type of battery connector to prevent connection between the second type of replacement battery cartridge and the first type of battery connector.
Example 4. The power system of example 3, wherein the first type of battery connector includes a first member positioned to engage the second stopper element to prevent connection between the first type of replacement battery cartridge and the second type of battery connector, and the second type of battery connector includes at least one second member positioned to engage the first stopper element to prevent connection between the second type of replacement battery cartridge and the first type of battery connector.
Example 5. The power system of example 1, further comprising an enclosure configured to support the lever bar.
Example 6. The power system of example 5, wherein the lever bar is coupled to the enclosure to enable the lever bar to achieve the first position and the second position.
Example 7. The power system of example 5, wherein the enclosure includes a receiving slot configured to receive one of the first type of replacement battery cartridge or the second type of replacement battery cartridge therein.
Example 8. The power system of example 7, further comprising
   a first type of battery connector coupled to the enclosure, the first type of battery connector being configured to mate with the first type of replacement battery cartridge when fully inserting the first type of replacement battery cartridge in the receiving slot, and
   a second type of battery connector coupled to the enclosure, the second type of battery connector being configured to mate with the second type of replacement battery cartridge when fully inserting the second type of replacement battery cartridge into the receiving slot.
Example 9. The power system of example 1, wherein the lever bar includes a tab portion configured to be grasped to move the lever bar between the first position and the second position.
Example 10. The power system of example 1,
   wherein in the first position, the lever bar is configured to manipulate a mating external battery connector to mate with the first type of external battery connector and to block the second type of external battery connector, and
   wherein in the second position, the lever bar is configured to manipulate the mating external battery connector to mate with the second type of external battery connector and to block the first type of external battery connector.
Example 11. The power system of example 10, further comprising a spring configured to bias the lever bar in the first position or in the second position.
Example 12. The power system of example 1, wherein
   the first type of replacement battery cartridge includes a lead-acid type battery,
   an external battery connected to the first type of external battery connector includes a lead-acid type battery,
   the second type of replacement battery cartridge includes a lithium-ion type battery, and
   an external battery connected to the second type of external battery connector includes a lithium-ion type battery.
Example 13. A method of connecting a type of replacement battery cartridge and a type of external battery within a power system, the method comprising:
   selecting one of a first position or a second position of a lever bar of the power system;
   when in the first position, the power system being configured to -
      mate with a first type of replacement battery cartridge,
      mate with a first type of external battery connector,
      block a second type of replacement battery cartridge, and
      block a second type of external battery connector; and
   when in the second position, the power system being configured to -
      mate with the second type of replacement battery cartridge,
      mate with the second type of external battery connector,
      block the first type of replacement battery cartridge, and
      block the first type of external battery connector.
Example 14. The method of example 13, further comprising
   connecting a first type of battery connector to the first type of replacement battery cartridge, and
   connecting a second type of battery connector to the second type of replacement battery cartridge.
Example 15. The method of example 14, further comprising
   engaging a first stopper element associated with the first type of replacement battery cartridge with the second type of battery connector to prevent connection between the first type of replacement battery cartridge and the second type of battery connector, and
   engaging a second stopper element associated with the second type of replacement battery cartridge with the first type of battery connector to prevent connection between the second type of replacement battery cartridge and the first type of battery connector.
Example 16. The method of example 15, further comprising
   positioning a first member of the first type of battery connector to engage the second stopper element to prevent connection between the first type of replacement battery cartridge and the second type of battery connector, and
   positioning a second member of the second type of battery connector to engage the first stopper element to prevent connection between the second type of replacement battery cartridge and the first type of battery connector.
Example 17. The method of example 13, wherein the lever bar is supported by an enclosure.
Example 18. The method of example 17, wherein the lever bar is coupled to the enclosure to enable the lever bar to achieve the first position and the second position.
Example 19. The method of example 17, wherein the enclosure includes a receiving slot configured to receive one of the first type of replacement battery cartridge or the second type of replacement battery cartridge therein.
Example 20. The method of example 19, further comprising
   coupling a first type of battery connector to the enclosure, the first type of battery connector being configured to mate with the first type of replacement battery cartridge when fully inserting the first type of replacement battery cartridge in the receiving slot, and
   coupling a second type of battery connector to the enclosure, the second type of battery connector being configured to mate with the second type of replacement battery cartridge when fully inserting the second type of replacement battery cartridge into the receiving slot.
Example 21. The method of example 13, wherein the lever bar includes a tab portion configured to be grasped to move the lever bar between the first position and the second position.
Example 22. The method of example 13,
   wherein in the first position, the lever bar is configured to manipulate a mating external battery connector to mate with the first type of external battery connector and to block the second type of external battery connector, and
   wherein in the second position, the lever bar is configured to manipulate the mating external battery connector to mate with the second type of external battery connector and to block the first type of external battery connector.
Example 23. The method of example 13, further comprising biasing the lever bar in the first position or in the second position with a spring.
Example 24. The method of example 13, wherein
   the first type of replacement battery cartridge includes a lead-acid type battery,
   an external battery connected to the first type of external battery connector includes a lead-acid type battery,
   the second type of replacement battery cartridge includes a lithium-ion type battery, and
   an external battery connected to the second type of external battery connector includes a lithium-ion type battery.

Having thus described several aspects of at least one embodiment of this disclosure, it is to be appreciated various alterations, modifications, and improvements can readily occur to those skilled in the art. Such alterations, modifications, and improvements are intended to be part of this disclosure, and are intended to be within the spirit and scope of the disclosure. Accordingly, the foregoing description and drawings are by way of example only.

## Claims

1. A power system, comprising:
a lever bar (80) configured to move between a first position and a second position,
in the first position, the lever bar is configured to enable the power system to
mate with a first type of replacement battery cartridge (12),
mate with a first type of external battery connector (56),
block a second type of replacement battery cartridge (14), and
block a second type of external battery connector (62),
in the second position, the lever bar is configured to enable the power system to
mate with the second type of replacement battery cartridge,
mate with the second type of external battery connector,
block the first type of replacement battery cartridge, and
block the first type of external battery connector.

2. The power system of claim 1, further comprising
a first type of battery connector (36) configured to connect to the first type of replacement battery cartridge, and
a second type of battery connector configured to connect to the second type of replacement battery cartridge.

3. The power system of claim 2, further comprising
a first stopper element (84) associated with the first type of replacement battery cartridge, and
a second stopper element associated with the second type of replacement battery cartridge,
wherein the first stopper element is configured to engage the second type of battery connector to prevent connection between the first type of replacement battery cartridge and the second type of battery connector, and the second stopper element is configured to engage the first type of battery connector to prevent connection between the second type of replacement battery cartridge and the first type of battery connector.

4. The power system of claim 3, wherein the first type of battery connector includes a first member positioned to engage the second stopper element to prevent connection between the first type of replacement battery cartridge and the second type of battery connector, and the second type of battery connector includes at least one second member positioned to engage the first stopper element to prevent connection between the second type of replacement battery cartridge and the first type of battery connector.

5. The power system of any of the above claims, further comprising an enclosure configured to support the lever bar.

6. The power system of claim 5, wherein the lever bar is coupled to the enclosure to enable the lever bar to achieve the first position and the second position.

7. The power system of claim 5 or of claim 6, wherein the enclosure includes a receiving slot (34) configured to receive one of the first type of replacement battery cartridge or the second type of replacement battery cartridge therein.

8. The power system of claim 7, further comprising
a first type of battery connector coupled to the enclosure, the first type of battery connector being configured to mate with the first type of replacement battery cartridge when fully inserting the first type of replacement battery cartridge in the receiving slot, and
a second type of battery connector coupled to the enclosure, the second type of battery connector being configured to mate with the second type of replacement battery cartridge when fully inserting the second type of replacement battery cartridge into the receiving slot.

9. The power system of any of the above claims, wherein the lever bar includes a tab portion configured to be grasped to move the lever bar between the first position and the second position.

10. The power system of any of the above claims,
wherein in the first position, the lever bar is configured to manipulate a mating external battery connector (38) to mate with the first type of external battery connector and to block the second type of external battery connector, and
wherein in the second position, the lever bar is configured to manipulate the mating external battery connector to mate with the second type of external battery connector and to block the first type of external battery connector.

11. The power system of claim 10, further comprising a spring (86) configured to bias the lever bar in the first position or in the second position.

12. The power system of any of the above claims, wherein
the first type of replacement battery cartridge includes a lead-acid type battery,
an external battery connected to the first type of external battery connector includes a lead-acid type battery,
the second type of replacement battery cartridge includes a lithium-ion type battery, and
an external battery connected to the second type of external battery connector includes a lithium-ion type battery.

13. The power system of any of the above claims, wherein the power system is configured to connect a replacement battery cartridge and an external battery of a same type in parallel.

14. The power system according to claim 13, the power system further comprising the replacement cartridge and the external battery connected in parallel.

15. A method of connecting a type of replacement battery cartridge and a type of external battery within a power system according to any of the above claims, the method comprising:
selecting one of a first position or a second position of a lever bar of the power system;
when in the first position, the power system being configured to -
mate with a first type of replacement battery cartridge,
mate with a first type of external battery connector,
block a second type of replacement battery cartridge, and
block a second type of external battery connector; and
when in the second position, the power system being configured to -
mate with the second type of replacement battery cartridge,
mate with the second type of external battery connector,
block the first type of replacement battery cartridge, and
block the first type of external battery connector.
